# EUROPEAN PATENT APPLICATION

(11) **EP 3 945 453 A1**
(43) Date of publication of application: **02.02.2022**
(21) Application number: 20188893.0
(22) Date of filing: 31.07.2020
(51) Int. Cl.: G06K 9/00, G06K 9/20, G02B 17/00

(54) **CAPTURING APPARATUS**

(71) Applicant: Panasonic Intellectual Property Management Co., Ltd., Osaka-shi, Osaka 540-6207 (JP)
(72) Inventor: ORIKASA, Keiichiro, Osaka-shi, Osaka 540-6207 (JP)
(74) Representative: Grünecker Patent- und Rechtsanwälte PartG mbB

(57) **Abstract**

A capturing apparatus includes a capturing unit which captures an obj ect, and a mirror which is installed in an angle of view of the capturing unit so as to exist as a part of an image captured by the capturing unit. The mirror reflects light coming from a part, existing outside the angle of view of the capturing unit, of the object so that the light enters on the capturing unit.

## Description

### BACKGROUND OF THE INVENTION

### 1. FIELD OF THE INVENTION

The present disclosure relates to a capturing apparatus.

### 2. BACKGROUND ART

A passers-by watching system is known that watches for a nonpermitted person who is going to enter an entrance-restricted area illegally by eliminating blind spots of a surveillance camera instead of using plural surveillance cameras (refer to JP-A-2008-182459, for example). In this passers-by watching system, a camera capable of taking a moving image is installed on a wall portion located above a door. The camera captures the doorway and its neighborhood from a first direction. A mirror is fixed to a prescribed ceiling portion at a prescribed angle so as to be included in a capturing angle of view of the camera. When viewed from the installation position of the camera, a scene in the vicinity of the doorway as viewed from a second direction is reflected in the mirror. Whether one person or plural persons are passing through the doorway is judged based on image data taken by the camera.

### SUMMARY OF THE INVENTION

The concept of the present disclosure has been conceived in view of the above circumstances in the art, and an object of the invention is therefore to provide a capturing apparatus capable of increasing the accuracy of detection of a human posture.

The disclosure provides a capturing apparatus including a capturing unit which captures an object and a mirror which is installed in an angle of view of the capturing unit so as to exist as part of an image captured by the capturing unit. The mirror reflects light coming from part, existing outside the angle of view of the capturing unit, of the object so that the light enters on the capturing unit.

The capturing apparatus according to the disclosure makes it possible to analyze a posture of a person as an object properly and thereby increase the accuracy of detection of a posture of the person.

Further advantages and advantageous effects of an embodiment of the disclosure will become apparent from the following specification and the accompanying drawings. Although each of such advantages and/or advantageous effects is provided by features described in the embodiment and the specification and the accompanying drawings, all of them need not always be provided to obtain one or more identical features.

The above comprehensive or specific modes may be realized in the form of a system, an apparatus, a method, an integrated circuit, a computer program, or a recording medium or a desired combination of a system, an apparatus, a method, an integrated circuit, a computer program, or a recording medium.

### BRIEF DESCRIPTION OF DRAWINGS

Fig. 1A is a view showing an example ideal state of a person sitting in a seat such as a pilot seat;
Fig. 1B is a view showing an example real state of the person sitting in a seat such as a pilot seat;
Fig. 2 is a view showing an example state that the person is unconscious;
Fig. 3A is a schematic diagram showing an angle of view and a manner of disposition of a capturing apparatus of Comparative Example and an example positional relationship between the capturing apparatus and a person as an object;
Fig. 3B shows an example image captured by the capturing apparatus shown in Fig. 3A;
Fig. 4 is a schematic diagram showing an example manner of disposition of a capturing apparatus according to a first embodiment;
Fig. 5A is a schematic diagram showing an angle of view and a manner of disposition of the capturing apparatus according to the first embodiment and an example positional relationship between the capturing apparatus and a person as an object;
Fig. 5B shows an example image captured by the capturing apparatus shown in Fig. 5A;
Fig. 6 is a block diagram showing an example hardware configuration of the capturing apparatus CM1 according to the first embodiment;
Fig. 7 is a flowchart showing an example operation procedure of the capturing apparatus CM1 according to the first embodiment; and
Fig. 8 is a block diagram showing an example hardware configuration of a capturing system according to Modification of the first embodiment.

### DETAILED DESCRIPTION OF THE EXEMPLARY EMBODIMENT

### (Background leading to disclosure)

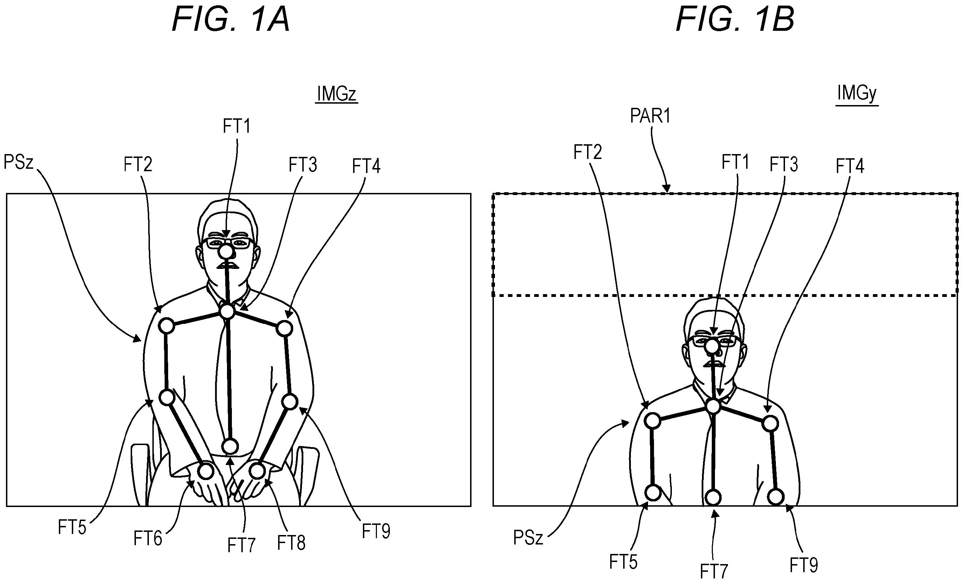

First, before the description of the capturing apparatus according to the present disclosure, the background leading to the disclosure will be described with reference to Figs. 1A and 1B, 2, and 3A and 3B. Fig. 1A is a view showing an example ideal state of a person PSz sitting in a seat such as a pilot seat. Fig. 1B is a view showing an example real state of the person PSz sitting in a seat such as a pilot seat.

For example, in the cockpit of an airplane, there may occur a case that it is desired to analyze, correctly, a posture of a person PSz sitting in a seat such as a pilot seat using an image captured by a camera. In such a case, it is desired that the camera shoot the person PSz with such an angle of view that includes as many skeletal points (feature points) as possible of a body (e.g., an upper half body including both arms) of the person PSz.

For example, in an image IMGz taken shown in Fig. 1A is of an example ideal state to be used for analyzing a posture of the person PSz correctly because the camera is disposed so that skeletal points FT1, FT2, FT3, FT4, FT5, FT6, FT7, FT8, and FT9 are included in the angle of view.

However, in a real environment, an installation position of the capturing apparatus and an angle of view for capturing of the capturing apparatus are restricted.. As a result, as in an image IGMy taken shown in Fig. 1B, there may frequently occur a case that part (e.g., skeletal points FT6 and FT8) of the above skeletal points are not included in the angle of view to lower the accuracy of analysis of a posture of the person PSz. That is, the image shown in Fig. 1B has an unnecessary image region PARI and hence the angle of view of the camera is insufficient for capturing of a lower portion of the person PSz, resulting in a failure of detecting important skeletal points (e.g., located around his fingers) of the person PSz.

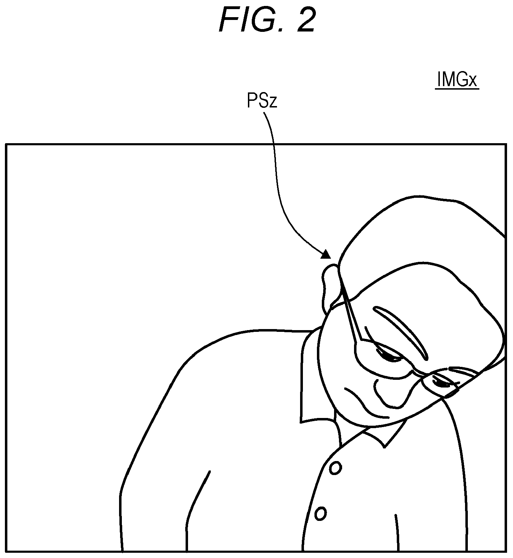

Fig. 2 is a view showing an example state that the person PSz is unconscious. Where the person PSz is, for example, an airplane pilot, he manipulates various instruments etc. installed in the cockpit to pilot the airplane. Thus, if the angle of view of the camera is insufficient for capturing of a lower portion of the person PSz, an image like an image IMGx shown in Fig. 2 is obtained and hence a movement of the hands of the pilot cannot be recognized. As a result, for example, a posture of the pilot who bends forward to manipulate an instrument or write a current situation etc. on a notebook cannot be detected properly, possibly causing an event that he is judged unconscious erroneously (see Fig. 2).

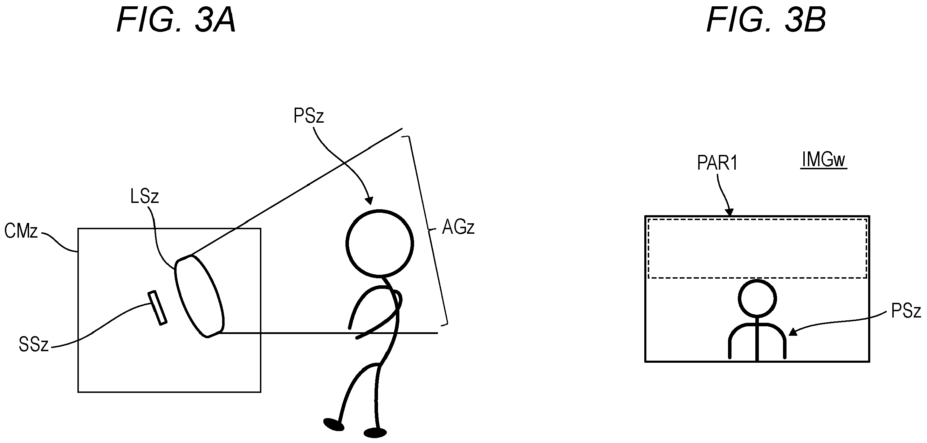

Fig. 3A is a schematic diagram showing an angle of view AGz and a manner of disposition of a capturing apparatus CMz of Comparative Example and an example positional relationship between the capturing apparatus CMz and a person PSz as an object. Fig. 3B shows an example image IMGw taken by the capturing apparatus CMz shown in Fig. 3A. The capturing apparatus CMz is configured so as to include at least a lens LSz and an image sensor SSz, and performs capturing by receiving, with the image sensor SSz, light that comes from part, included in the angle of view AGz, of the object and enters on the lens LSz (e.g., a light beam corresponding to an optical image of the person PSz). Although the person PSz is located in the angle of view AGz of the capturing apparatus CMz, a portion of the person PSz from his hands to feet (in other words, a lower (half) portion of the person PSz) is not included in the angle of view AGz. As a result, the portion of the person PSz from his hands to feet is not found in the image IMGw (see Fig. 3B). That is, an unnecessary image region PARI exists close to the upper half body of the image IMGw as shown in Fig. 3B and an image of only part of the upper half body of the person PSz who is an important object is taken. This makes it difficult to analyze a posture of the person PSz correctly, and therefore it is desired to increase the accuracy of detection of a posture.

In view of the above, in the following embodiment, an example capturing apparatus capable of analyzing a posture of a person as an object properly and thereby increasing the accuracy of detection of the posture of the person.

An embodiment as a specific disclosure of a capturing apparatus according to the present disclosure will be described in detail by referring to the drawings when necessary. However, unnecessarily detailed descriptions may be avoided. For example, detailed descriptions of already well-known items and duplicated descriptions of constituent elements having substantially the same ones already described may be omitted. This is to prevent the following description from becoming unnecessarily redundant and thereby facilitate understanding of those skilled in the art. The following description and the accompanying drawings are provided to allow those skilled in the art to understand the disclosure thoroughly and are not intended to restrict the subject matter set forth in the claims.

### (Embodiment 1)

The first embodiment is directed to an example use in which a capturing apparatus CM1 according to the disclosure is installed in a cockpit CKP1 of an airplane and the object is a pilot of the airplane. However, uses of the first embodiment are not limited to this. For example, the capturing apparatus may be used in such a manner that it is installed in a body of the back of a seat of an airplane and the object is a passenger of the airplane.

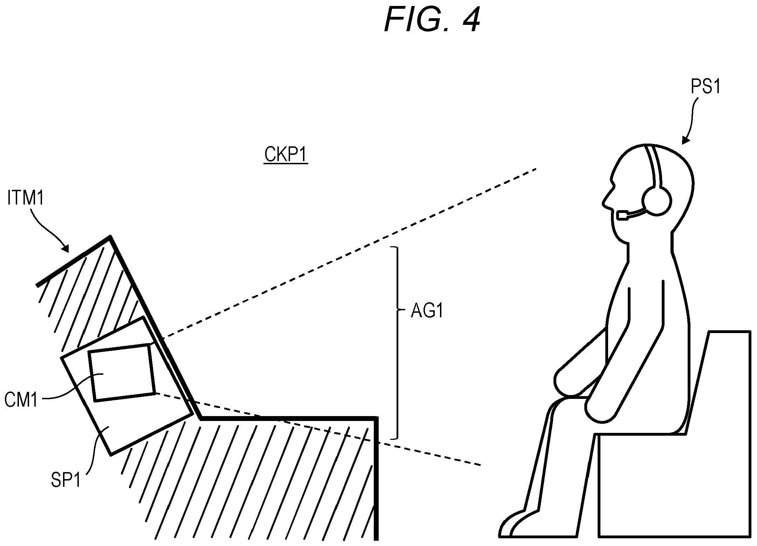

Fig. 4 is a schematic diagram showing an example manner of disposition of the capturing apparatus CM1 according to the first embodiment. As shown in Fig. 4, for example, the capturing apparatus CM1 is installed in an instrument box ITM1 that is disposed in front of a person PS1 who is a pilot sitting in a pilot seat in a cockpit CKP1 of an airplane. For example, an installation space SP1 for the capturing apparatus CMlis provided between some instruments and instruments adjacent them among the plural instruments installed in the instrument box ITM1. The capturing apparatus CM1 is installed in the installation space SP1. The angle of view AG1 of the capturing apparatus CM1 is set so that it can mainly shoot an upper half body of the person PS 1 and thereby a state of the person PS 1 (pilot) can be monitored. However, it is difficult to for light coming from the hands or feet to enter on the capturing apparatus CM1 being interrupted by part of the instrument box ITM1.

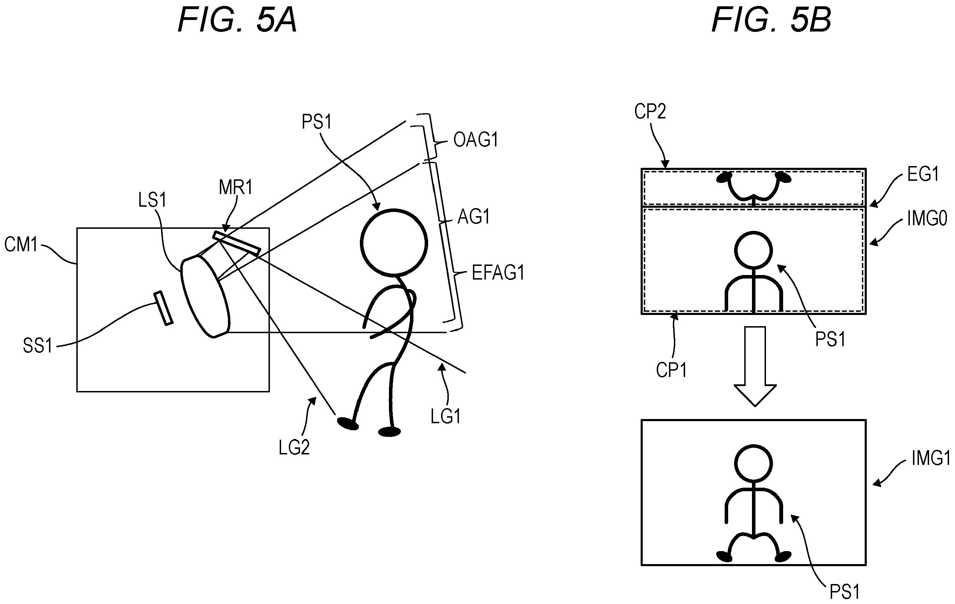

Fig. 5A is a schematic diagram showing an angle of view AG1 and a manner of disposition of the capturing apparatus CM1 of the first embodiment and an example positional relationship between the capturing apparatus CM1 and a person PS1 as an object. Fig. 5B shows an example image IMG0 taken by the capturing apparatus CM1 shown in Fig. 5A. The capturing apparatus CM1 is configured so as to include at least a lens LS1 and an image sensor SS1, and performs capturing by receiving, with the image sensor SS1, light that comes from part, included in the angle of view AG1 of the capturing apparatus CM1, of the object and enters on the lens LS1 (e.g., a light beam corresponding to an optical image of the person PS1). The lens LS1 and the image sensor SS1 constitute a capturing unit of the capturing apparatus CM1. Thus, the imaging apparatus CM1 is formed with, on the front side of the lens LS1 (i.e., on the side of the capturing apparatus CM1 where the object exists), an opening (not shown) to allow light to enter on the lens LS1.

The capturing apparatus CM1 is further equipped with a mirror MR1 that is installed in the angle of view AG1 of the capturing unit (mentioned above) so as to occupy part of an image to be taken by the capturing unit. As shown in Fig. 5A, the mirror MR1 is disposed in the vicinity of the lens LS1. The mirror MR1 reflects light beams LG1 and LG2 coming from part of the object located outside the angle of view AG1 (e.g., from around the hands or feet of the person PS1) and thereby causes the light beams LG1 and LG2 to enter on the lens LS1. As such, the capturing apparatus CM1 takes an image (e.g., image IMGO) of the object based on light that is in a direct angle of view EFAG1 that is part, allowing direct incidence of light on the lens LS1, of the angle of view AG1 and light that is in an indirect angle of view that is located outside the angle of view AG1 but allows incidence of light on the lens LS1 through reflection by the mirror MR1 (in other words, an angle of view OAG1 corresponding to the difference between the angle of view AG1 and the direct angle of view EFAG1).

As shown in the top part of Fig. 5B, the image IMG0 (image taken) that is generated originally by the capturing apparatus CM1 is a combination of a partial image CP1 produced through reception and imaging of light coming from the direct angle of view EFAG1 and a partial image CP2 produced through reception and imaging of light coming from the indirect angle of view (refer to the above-mentioned angle of view OAG1) via the mirror MR1. This is because light reflected by the mirror MR1 included in the angle of view AG1 results in shining on the lens LS1 and imaged by the capturing apparatus CM1. The partial image CP2 is oriented upside down because the light beams (e.g., LG1 and LG2) enter on the lens LS1 after being reflected once by the mirror MR1.

The partial image CP1 is taken so as to mainly include the upper half body and the hands of the person PS1. The partial image CP2 is taken so as to mainly include the lower half body and the feet. The image IMG0 is divided into the partial images CP1 and CP2 with an edge EG1 of the mirror surface of the mirror MR1 as a boundary. As described later, a position of the edge EG1 is detected by analyzing the image IMG0 utilizing the fact that image parameters (e.g., RGB pixel values or luminance values indicating pixel brightness values) are discontinuous around the edge EG1 of the mirror MR1.

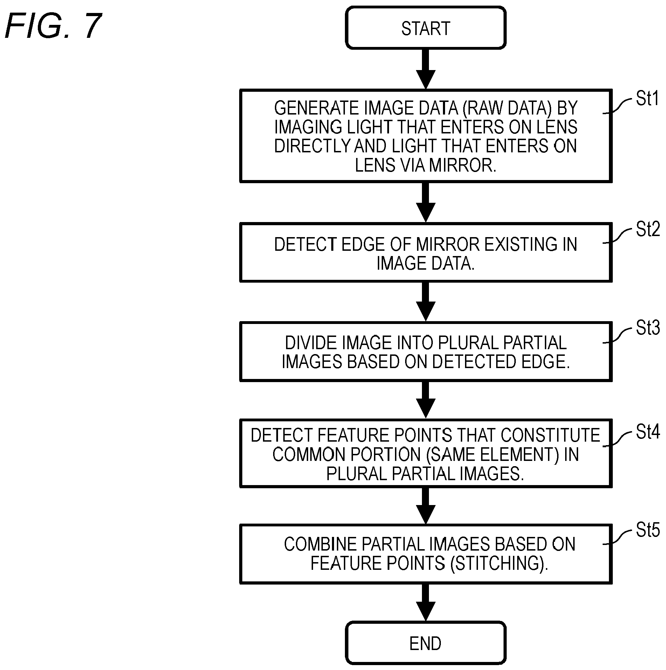

The capturing apparatus CM1 generates an image IMG1 by recombining the partial images CP1 and CP2 using the detected edge EG1. An operation procedure for generation of the image IMG1 will be described later with reference to Fig. 7.

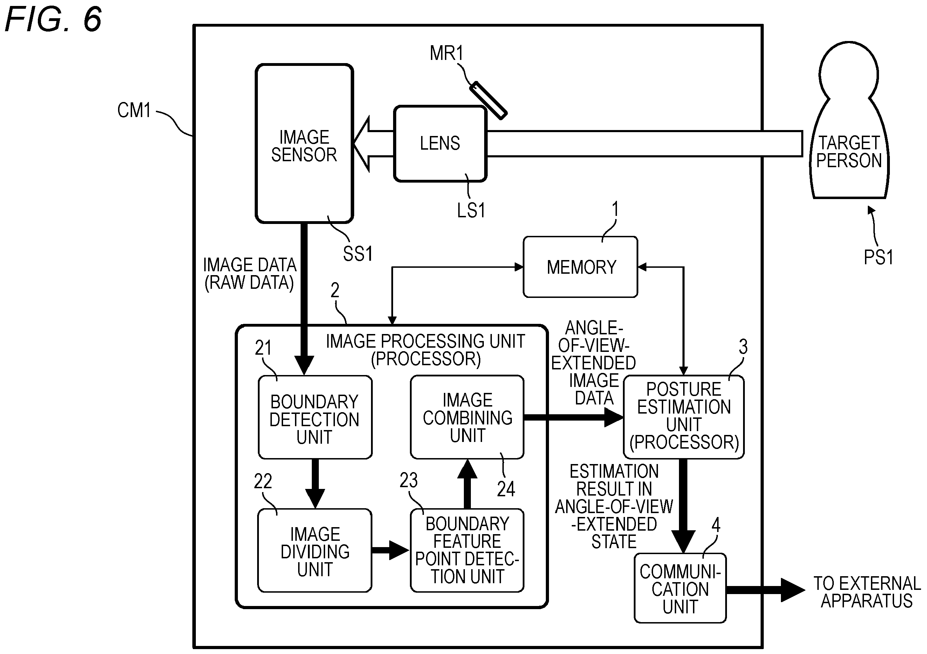

Next, an example hardware configuration of the capturing apparatus CM1 according to the first embodiment will be described with reference to Fig. 6. Fig. 6 is a block diagram showing the example hardware configuration of the capturing apparatus CM1 according to the first embodiment. The capturing apparatus CM1 includes the mirror MR1, the lens LS1, the image sensor SS1, a memory 1, an image processing unit 2, a posture estimation unit 3, and a communication unit 4. A target person shown in Fig. 6 is a person PS1 as an object of the capturing apparatus CM1.

The mirror MR1 is disposed in the vicinity of the lens LS1 so as to be included in the angle of view AG1 of the capturing unit (mentioned above) of the capturing apparatus CM1, and reflects light beams LG1 and LG2 coming from part, located outside the angle of view AG1, of the object (e.g., coming from around the hands or feet of the person PS1) so that the light beams LG1 and LG2 enter on the lens LS1.

The lens LS1 includes, for example, a focusing lens and a zoom lens, and receives light coming from the object directly or via the mirror MR1 and forms an optical image of the object on the photodetecting surface (in other words, imaging surface) of the image sensor SS1. Any of lenses having various focal distances or capturing ranges may be used as the lens LS1 according to the installation location of the capturing apparatus CM1, a capturing purpose, etc.

The image sensor SS1 performs photoelectric conversion to convert light shining on its photodetecting surface (in other words, imaging surface) into an electrical signal. For example, the image sensor SS1 is configured using a CCD (charge-coupled device) or a CMOS (complementary metal-oxide-semiconductor) sensor. The image sensor SS1 converts an electrical signal (analog signal) corresponding to light shining on its photodetecting surface (in other words, imaging surface) into digital image data (raw data). In this manner, the image sensor SS1 generates data of an image (e.g., image IMG0 shown in Fig. 5B). The conversion of the analog image signal into digital image data may be performed by the image processing unit 2.

For example, the memory 1 is configured using a RAM (random access memory) and a ROM (read-only memory), and holds programs that are necessary for operation of the capturing apparatus CM1 and temporarily holds data or information that is generated during operation of the capturing apparatus CM1. For example, the RAM is a work memory that is used during operation of the capturing apparatus CM1. For example, the ROM stores, in advance, the programs for controlling the capturing apparatus CM1 and holds them. In other words, the image processing unit 2 can cause the capturing apparatus CM1 which is a computer to perform various kinds of processing by running the programs stored in the ROM.

For example, the image processing unit 2 is configured using a processor such as a CPU (central processing unit), a DSP (digital signal processor), a GPU (graphical processing unit), or an FPGA (field-programmable gate array). The processor functions as a controller for controlling an overall operation of the capturing apparatus CM1 and performs control processing for controlling operations of the other individual units of the capturing apparatus CM1 in a centralized manner, processing for data input/output with the other individual units of the capturing apparatus CM1, data calculation processing, and data storage processing. The processor operates according to the programs and data stored in the memory 1. The processor uses the memory 1 while it operates, and stores, for temporal storage, data or information generated or acquired by the processor in the memory 1.

The image processing unit 2 performs analysis processing on the image data (raw data) generated by the image sensor SS1. The image processing unit 2 includes, as functional units, a boundary detection unit 21, an image dividing unit 22, a boundary feature point detection unit 23, and an image combining unit 24. The boundary detection unit 21, the image dividing unit 22, the boundary feature point detection unit 23, and the image combining unit 24 work as functional units by the above-mentioned processor's reading programs stored in the memory 1 and running them.

The boundary detection unit 21 detects the edge EG1 of the mirror MR1 existing in the image data (raw data) supplied from the image sensor SS1 based on the image data. The boundary detection unit 21 constitutes an "edge detection unit" of the capturing apparatus CM1. As described above, there is a feature that the parameters (e.g., RGB pixel values or luminance values indicating pixel brightness values) of the image data are discontinuous around the edge EG1 of the mirror MR1. The boundary detection unit 21 detects the edge EG1 of the mirror MR1 existing in the image data utilizing the above feature, and sends an edge detection result including a position (e.g., sets of coordinates) of the edge EG1 in the image data to the image dividing unit 22.

The image dividing unit 22 divides the image data (raw data) supplied to the boundary detection unit 21 into plural partial images based on the edge detection result (indicating the edge EG1 of the mirror MR1) supplied from the boundary detection unit 21. For example, as shown in Fig. 5B, the image dividing unit 22 divides the image IMG0 into plural (e.g., two) partial images CP1 and CP2. The image dividing unit 22 sends data of the images CP1 and CP2 to the boundary feature point detection unit 23.

The boundary feature point detection unit 23 analyzes each of the data of the image CP1 and the data of the image CP2 sent from the image dividing unit 22 and extracts feature points that constitute a common portion (the same element, that is, a body feature such as a waist that is a connection part of the upper half body and the lower half body and its neighborhood) of the object (e.g., person PS1) in the partial images CP1 and CP2. The boundary feature point detection unit 23 constitutes a "feature point detection unit" of the capturing apparatus CM1. The feature points serve as a boundary portion to be used for combining the partial images CP1 and CP2. The boundary feature point detection unit 23 sends a feature point detection result including positions (e.g., sets of coordinates) of the feature points in each of the partial images CP1 and CP2.

The image combining unit 24 generates an image IMG1 by combining the partial images CP1 and CP2 (stitching processing) based on the feature point detection result (i.e., the element, existing in both of the partial images CP1 and CP2, of the person PS1) sent from the boundary feature point detection unit 23. The image combining unit 24 constitutes a "stitching processing unit" of the capturing apparatus CM1.

More specifically, the image combining unit 24 inverts, in the vertical direction, the partial image CP2 taken by imaging light that was reflected by the mirror MR1 and entered on the image sensor SS1 and combines the inverted partial image CP2 with the original image CP1 so that the common element of the feature point detection result forms a continuous element. Alternatively, using the data of the partial images CP1 and CP2 sent from the image dividing unit 22, the image combining unit 24 may merely invert the partial image CP2 in the vertical direction and combine the inverted partial image CP2 with the original partial image CP1 (stitching processing). The image combining unit 24 sends the image IMG1 obtained by the stitching processing (in other words, angle-of-view-extended image data including image data obtained by capturing elements (feet etc.), located outside the angle of view AG1, of the person PS1) to the posture estimation unit 3.

For example, the posture estimation unit 3 is configured using a processor (mentioned above). The posture estimation unit 3 estimates a posture of the person PS1 existing in the angle-of-view-extended image data sent from the image processing unit 2 using the angle-of-view-extended image data and a prescribed human posture estimation algorithm. The posture estimation unit 3 sends an estimation result of a posture of the person PS1 (in other words, an estimation result in an angle-of-view extended state) to the communication unit 4.

The communication unit 4 is configured using a communication interface circuit capable of connecting to a network (not shown) and performs a data communication (transmission and reception) with an external apparatus (not shown) 1 that is connected to the communication unit 4 via the network (not shown). For example, the communication unit 4 transmits, to the external apparatus, data indicating the estimation result (e.g., the estimation result of the posture of the person PS1 in an angle-of-view-extended state) sent from the posture estimation unit 3.

Next, an operation procedure of the capturing apparatus CM1 according to the first embodiment will be described with reference to Fig. 7. Fig. 7 is a flowchart of an example operation procedure of the capturing apparatus CM1 according to the first embodiment.

Referring to Fig. 7, at step St1, the capturing apparatus CM1 performs capturing by receiving light that comes from a direct angle of view EFAG1 and enters on the lens LS1 directly and light that comes from an indirect angle of view (i.e., angle of view OAG1 shown in Fig. 5A) and enters on the lens LS1 via the mirror MR1. In this manner, the capturing apparatus CM1 can generate image data (raw data; e.g., image IMGO).

At step St2, the capturing apparatus CM1 detects the edge EG1 of the mirror MR1 existing in the image data generated at step St1. At step St3, the capturing apparatus CM1 divides the image data into plural partial image data (e.g., partial images CP1 and CP2) based on a position of the edge EG1 detected at step St2 in the image data. At step St4, the capturing apparatus CM1 analyzes the data of each of the partial images CP1 and CP2 and detects feature points that constitute a common portion (the same element, that is, a body feature such as a waist that is a connection part of the upper half body and the lower half body and its neighborhood) of the object (e.g., person PS1) in the partial images CP1 and CP2.

At step St5, the capturing apparatus CM1 generates an image IMG1 by combining the partial images CP1 and CP2 (stitching processing) based on the feature point detection result (i.e., the element, existing in both of the partial images CP1 and CP2 of the person PS1) of step St4. At step St5, the capturing apparatus CM1 inverts, in the vertical direction, the partial image CP2 taken by imaging light that was reflected by the mirror MR1 and entered on the image sensor SS1 and combines the inverted partial image CP2 with the original image partial CP1 so that the common element of the feature point detection result forms a continuous element.

As described above, the capturing apparatus CM1 according to the first embodiment includes the capturing unit which captures an object (e.g., person PS1), and the mirror MR1 which is installed in the angle of view AG1 of the capturing unit so as to exist as part of an image (e.g., image IMGO) taken by the capturing unit. The mirror MR1 reflects light coming from part (e.g., the lower half body, such as feet, of the person PS1), existing outside the angle of view of the capturing unit, of the object so that the light enters on the capturing unit. The image sensor SS1 of the capturing apparatus CM1 generates image data (raw data) by photodetecting light shining on the lens LS1 which is part of the capturing unit.

Configured as described above, the capturing apparatus CM1 can properly analyze a posture of the object (person PS1) who is, for example, a monitoring target and hence can increase of accuracy of detection of a posture of the person PS1 indicating whether the current situation of the person PS1 is normal or abnormal. Furthermore, capable of causing light coming from part, outside the angle of view AG1, of the object to enter on the lens LS1 and imaging that light, the capturing apparatus CM1 can expand the angle of view for capturing in a simulated manner and perform capturing in a wider range. Also, the capturing apparatus CM1 can prevent the captured image from decreasing the number of pixels in contrast to a case of using a wide-angle lens. Still further, capable of being installed in the installation space SP1 provided in the instrument box ITM1, the capturing apparatus CM1 makes it possible to properly recognize a situation of the person PS1 (monitoring target) such as a pilot without undue increase of the installation space of the capturing apparatus CM1.

The capturing apparatus CM1 is further equipped with the edge detection unit (e.g., boundary detection unit 21) which detects an edge of the mirror MR1 existing in the image (e.g., raw data), an image dividing unit 22 which divides the image (e.g., raw data) into plural partial images CP1 and CP2 based on the detected edge of the mirror MR1, and the stitching processing unit (e.g., image combining unit 24) which synthesizes an image of the object based on the plural partial images CP1 and CP2. With this measure, the capturing apparatus CM1 can generate, with high accuracy, an image IMG1 by increasing the angle of view in a simulated manner so that it comes to include part, located outside the angle of view AG1, of the person PS1 based on the image data (e.g., image IMGO) generated by the image sensor SS1.

The capturing apparatus CM1 is further equipped with the feature point detection unit (boundary feature point detection unit 23) which detects a common portion having the same element (e.g., a waist portion of the person PS1) of the object in the plural partial images CP1 and CP2. The stitching processing unit (e.g., image combining unit 24) synthesizes an image of the object based on a position of the common portion and the plural partial images CP1 and CP2. With this measure, the capturing apparatus CM1 can properly combine the partial image CP1 having part, located in the direct angle of view EFAG1, of the object and the partial image CP2 having part, located in the indirect angle of view (i.e., angle of view OAG1), of the object and hence can generate a highly reliable image IMD1 for estimation of a posture of the person.

In the capturing apparatus CM1, the capturing unit includes the lens LS1 on which light coming from the object (e.g., person PS1) enters on. The mirror MR1 is disposed in the vicinity of the lens LS1. This measure makes it easier to regard the mirror MR1 as part of the object to be captured, as a result of which light (i.e., light coming from part, outside the angle of view AG1 of the capturing apparatus CM1, of the object) reflected by the mirror MR1 and shining on the lens LS1 can be imaged so as to be included in the image IMG0.

The capturing apparatus CM1 is further equipped with the posture estimation unit 3 which estimates a posture of the object (e.g., person PS1) based on the synthesized image (e.g., image IMG1) of the object. With this measure, since the capturing apparatus CM1 can also shoot part (e.g., feet), located outside the angle of view AG1 (blind spot), of the person PS1, a posture of the person PS1 can be estimated with high accuracy in a state that the angle of view AG1 is expanded substantially.

### (Modification)

In the first embodiment, an image IMG1 of a person PS1 is generated and his posture is estimated only by the capturing apparatus CM1. In Modification of the first embodiment, an image IMG1 of a person PS1 is generated and his posture is estimated by an apparatus other than a capturing apparatus CM2, such as a PC (personal computer). The capturing apparatus CM2 merely performs capturing based on light shining on it.

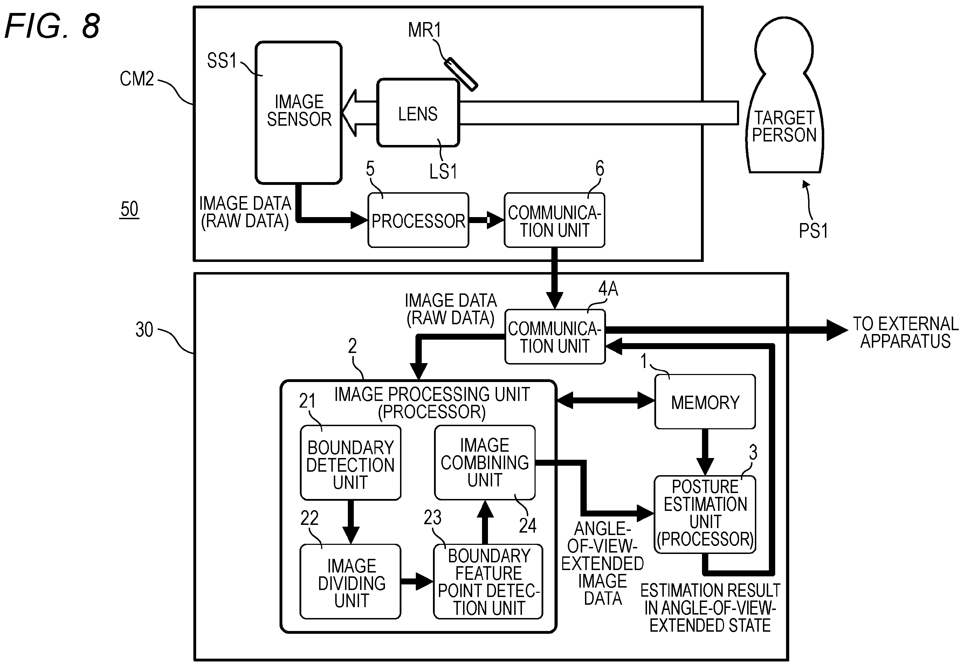

Fig. 8 is a block diagram showing an example hardware configuration of a capturing system 50 according to Modification of the first embodiment. The capturing system 50 is configured so as to include the capturing apparatus CM2 and an image processing apparatus 30 (an example of the above-mentioned apparatus other than a capturing apparatus CM2). The capturing apparatus CM2 and the image processing apparatus 30 are connected to each other by a network (not shown) so as to be able to perform a data communication between them. The network may be either a wired one or a wireless one. In the following description of Modification of the first embodiment (hereinafter referred to simply as "Modification"), constituent elements having the same ones in the capturing apparatus CM1 according to the first embodiment will be given the same reference symbols as the latter and their descriptions will be simplified or omitted; only differences will be described.

Like the capturing apparatus CM1 according to the first embodiment, the capturing apparatus CM2 is installed in an instrument box ITM1 that is disposed in front of a person PS1 who is a pilot sitting in a pilot seat in a cockpit CKP1 of an airplane.

The capturing apparatus CM2 is configured so as to include a mirror MR1, a lens LS1, an image sensor SS1, a processor 5, and a communication unit 6.

The processor 5, which is configured using a CPU, a DSP, or an FPGA (mentioned above), functions as a controller for controlling an overall operation of the capturing apparatus CM2 and performs control processing for controlling operations of the other individual units of the capturing apparatus CM2 in a centralized manner, processing for data input/output with the other individual units of the capturing apparatus CM2, data calculation processing, and data storage processing. The processor 5 operates according to programs and data stored in a memory (not shown). The processor 5 uses the memory (not shown) while it operates, and stores, for temporal storage, data or information generated or acquired by the processor 5 in the memory (not shown). The processor 5 sends, to the communication unit 6, image data (raw data) sent from the image sensor SS1.

The communication unit 6 is configured using a communication interface circuit that can be connected to the network (not shown), and performs a data communication (transmission and reception) with the image processing apparatus 30 which is connected to the communication unit 6 via the network (not shown). For example, the communication unit 6 transmits, to the image processing apparatus 30, image data (raw data) sent from the processor 5.

The image processing apparatus 30 is a PC, for example, and is configured so as to include a communication unit 4A, a memory 1, an image processing unit 2, and a posture estimation unit 3. The image processing apparatus 30 can perform a data communication (transmission and reception) with an external apparatus that is connected to the image processing apparatus 30 via a network (not shown). In the image processing apparatus 30, the memory 1, the image processing unit 2, and the posture estimation unit 3 operate in the same manners as those shown in Fig. 6 and hence descriptions of how they operate will be omitted.

The communication unit 4A receives image data (raw data) sent from the communication unit 6 and sends the received image data to the image processing unit 2. Furthermore, the communication unit 4A transmits, to the external apparatus, data of an estimation result (e.g., an estimation result of a posture of the person PS1 in an angle-of-view-extended state) sent from the posture estimation unit 3.

With the above configuration, in the capturing system 50 according to Modification, like the capturing apparatus CM1 according to the first embodiment, the image processing apparatus 30 can properly analyze a posture of the person PS1 who is an object (e.g., monitoring target). Since the image processing apparatus 30 can properly analyze a posture of the person PS1 using image data (raw data) sent from the capturing apparatus CM2, the capturing system 50 can increase of accuracy of detection of a posture of the person PS1 indicating whether the current situation of the person PS1 is normal or abnormal. Furthermore, capable of causing light coming from part, outside the angle of view AG1, of the object to enter on the lens LS1 and imaging that light, the capturing apparatus CM2 can expand the angle of view for capturing in a simulated manner and perform capturing in a wider range. Still further, capable of being installed in the installation space SP1 provided in the instrument box ITM1, the capturing apparatus CM2 makes it possible to properly recognize a situation of the person PS1 (monitoring target) such as a pilot without undue increase of the installation space of the capturing apparatus CM2.

Although the embodiment has been described above with reference to the drawings, it goes without saying that the disclosure is not limited to this example. It is apparent that those skilled in the art could conceive various changes, modifications, replacements, additions, deletions, or equivalents within the confines of the claims, and they are naturally construed as being included in the technical scope of the disclosure.

The present disclosure is useful when applied to capturing apparatus capable of analyzing a posture of a person as an object properly and increasing the accuracy of detection of a posture of the person.

## Claims

1. A capturing apparatus comprising:
a capturing unit configured to capture an object; and
a mirror installed in an angle of view of the capturing unit so as to exist as a part of an image captured by the capturing unit, wherein:
the mirror reflects light coming from a part, existing outside the angle of view of the capturing unit, of the object so that the light enters on the capturing unit.

2. The capturing apparatus according to claim 1, further comprising:
an edge detection unit configured to detect an edge of the mirror existing in the image;
an image dividing unit configured to divide the image into plural partial images based on the detected edge of the mirror; and
a stitching processing unit configured to synthesize an image of the object based on the plural partial images.

3. The capturing apparatus according to claim 2, further comprising:
a feature point detection unit configured to detect a common portion having the same element of the object in the plural partial images, wherein:
the stitching processing unit synthesizes an image of the object based on a position of the common portion and the plural partial images.

4. The capturing apparatus according to any one of claims 1 to 3, further comprising:
a lens on which light coming from the object enters, wherein:
the mirror is disposed in a vicinity of the lens.

5. The capturing apparatus according to any one of claims 2 to 4, further comprising:
a posture estimation unit configured to estimate a posture of the object based on the synthesized image of the object.
